(19)

Europäisches
Patentamt
European
Patent Office
Office européen
des brevets

(11)  **EP 4 357 371 A1**

(12)  **EUROPEAN PATENT APPLICATION**

(43) Date of publication:
24.04.2024  Bulletin 2024/17

(21) Application number: 22201839.2

(22) Date of filing: 17.10.2022

(51) International Patent Classification (IPC):
**C08F 2/00** *(2006.01)*        **C08F 210/16** *(2006.01)*
**C08F 10/02** *(2006.01)*      **C08F 110/02** *(2006.01)*
**C08L 23/06** *(2006.01)*      **C08L 23/08** *(2006.01)*

(52) Cooperative Patent Classification (CPC):
(C-Sets available)
**C08F 110/02; C08F 10/02; C08L 23/06;**
**C08L 23/0815;** C08F 210/16; C08L 2205/025;
C08L 2205/03                              (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicants:
• **Thai Polyethylene Co., Ltd.**
**21150 Rayong (TH)**

• **SCG Chemicals Public Company Limited**
**10800 Bangkok (TH)**

(72) Inventors:
• **Ekabutr, Pongpol**
**21150 Rayong (TH)**
• **Suchao-in, Natthaporn**
**21150 Rayong (TH)**

(74) Representative: **Erbacher, Martin**
**Boehmert & Boehmert**
**Anwaltspartnerschaft mbB**
**Pettenkoferstrasse 22**
**80336 München (DE)**

(54)  **MULTIMODAL POLYETHYLENE COMPOSITION AND EXTRUSION ARTICLE COMPRISING THE SAME**

(57)     The present invention relates to a multimodal polyethylene composition having excellent mechanical properties and to an extrusion article, such as a rod profile, a tube profile or a hollow article, such as a pipe, comprising the same.

EP 4 357 371 A1

(52) Cooperative Patent Classification (CPC): (Cont.)

C-Sets
**C08F 10/02, C08F 4/653;**
**C08F 210/16, C08F 2/001;**
**C08L 23/06, C08L 23/0815, C08L 23/0815;**
**C08L 23/0815, C08L 23/06, C08L 23/0815;**
C08F 110/02, C08F 2500/17;
C08F 210/16, C08F 4/6545;
C08F 210/16, C08F 210/08, C08F 2500/04,
C08F 2500/05, C08F 2500/17, C08F 2500/27,
C08F 2500/31, C08F 2500/39;
C08F 210/16, C08F 210/14, C08F 2500/04,
C08F 2500/05, C08F 2500/17, C08F 2500/27,
C08F 2500/31, C08F 2500/39

**Description**

TECHNICAL FIELD

The present invention relates to a multimodal polyethylene composition having excellent mechanical properties and to an extrusion article, such as a rod profile, a tube profile or a hollow article, such as a pipe, comprising the same.

BACKGROUND OF THE INVENTION

Polyethylene pipes are widely used in variety of applications, for example, for transport of drinking water, gas, or fluid, in which the fluids can be pressurized or non-pressurized. It is generally known that PE100 and PE112 materials are accepted to be used in many applications. However, in some extremely severed applications, such as mining industry, tailing pipeline, highly abrasive particulate matter, such as, sand slurry, rock, sediment slurry is transferred from place to place within the pipeline which is highly abrasive stream. The abrasion degree of a pipe wall depends on the size of particulate matter, velocity, temperature and duration of transport. Some manufacturers have used PE100 pipe for mining operation. However, there is the problem that the pipe is quickly worn out so that the pipe lifetime is too short. The ruined pipes have to be replaced with new pipes which are highly expensive for installation.

Advanced polyethylene pipe materials are required for high abrasion resistance applications. Many patents have confirmed that an increase of molecular weight of polyethylene can promote wear resistance of materials. In order to select new alternative materials, UHMWPE materials have been of interest. For example, PE1000 having a viscometer molecular weight (Mv) of more than 3,000,000 g/mol shows an excellent abrasion resistance compared to PE100. However, PE1000 is drastically difficult to be manufactured by conventional single screw pipe extrusion process (SSE) due to its high melt viscosity so this material requires special equipment such as RAM extrusion process to produce a pipe. This method is low in productivity and requires high energy making PE1000 highly expensive compared to HDPE materials.

WO 2013/144328 describes a composition of a multimodal high density polyethylene which is produced using a Ziegler-Natta catalyst for use in molding applications. A small fraction of ultrahigh polyethylene of less than 15 % by weight is produced in a third reactor.

EP 2 354 184 A1 discloses a polyethylene moulding composition having a multimodal weight distribution and dealing with stress crack or stiffness, relationship and impact resistance.

WO 2009/147022 A1 is related to a high density polymer composition, a method for the preparation thereof and pipes made therefrom. The composition comprises a multimodal copolymer of ethylene and α-olefin.

EP 2017302A1 refers to a moulded article comprising a high density polyethylene copolymer which comprises a multimodal high density ethylene-hexene copolymer further containing at least one lower molecular weight polyethylene homopolymer component.

WO 2007/045415A1 is related to a polyethylene composition comprising at least a first composition and a second composition wherein the composition comprises a low molecular weight polyethylene and a high molecular weight polyethylene which may both be selected as a homo- or copolymer.

WO 2008/131817 A1 is related to a pipe or a related article comprising a multimodal polyethylene composition.

JP 2012-067914 A1 is related to a polymer pipe formed by a multimodal polymer composition and deals with improved stress resistance.

WO 2013056754A1 is related to polyolefin composition with improved pressure and impact resistance, especially, rapid crack propagation resistance (RCP).

EP 2354183A1 is related to a polyethylene composition having excellent mechanical properties, hardness, abrasion resistance, impact resistance and slow crack growth.

However, there is still a need to provide multimodal polyethylene compositions for preparing pipe overcoming drawbacks of the prior art, in particular to provide high density polyethylene compositions for producing pipe having improved properties, such as abrasion resistance and processability.

Even though many processes for preparing multimodal polyethylene compositions are known and have been described, there is still a need for developing new multimodal polymerization methods, particularly for further improving the mechanical properties of polyethylene compositions.

It is a further object of the present invention to provide multimodal polyethylene compositions overcoming drawbacks of the prior art, in particular having improved mechanical properties.

DISCLOSURE

These objects are achieved by a multimodal polyethylene composition comprising;

(A) 25 to 65 % by weight, with respect to the total weight of the multimodal polyethylene composition, of a low molecular weight polyethylene having a viscometer molecular weight, Mv, from 35,000 to 90,000 g/mol;

(B) 8 to 42 % by weight, with respect to the total weight of the multimodal polyethylene composition, of a first high molecular weight polyethylene homopolymer or copolymer having viscometer molecular weight, Mv, from 750,000 to 3,500,000 g/mol;

(C) 24 to 57 % by weight, with respect to the total weight of the multimodal polyethylene composition, of a second high molecular weight polyethylene homopolymer or copolymer having viscometer molecular weight, Mv, from 400,000 to 3,000,000 g/mol;

wherein multimodal polyethylene composition has

- viscometer molecular weight of 500,000 to 1,000,000, g/mol;

- an intrinsic viscosity of 4.5 to 7.5 dl/g measured according to ISO 1682;

- a comonomer of 0.16 % to 1.2 % mol, with respect to the total amount of monomer in the low molecular weight polyethylene, the first high molecular weight polyethylene homopolymer or copolymer, and the second high molecular weight polyethylene homopolymer or copolymer; and

the first high molecular weight polyethylene homopolymer or copolymer and the second high molecular weight polyethylene homopolymer or copolymer differ from each other with respect to the viscometer molecular weight thereof.

The multimodal polyethylene composition may have a viscometer molecular weight of 500,000 to 900,000, preferably 500,000 to 870,000, more preferably 550,000 to 860,000 g/mol, most preferred from 550,000 to 854,000 g/mol.

The multimodal polyethylene composition may have a stain hardening modulus, <Gp>, from 40 to 85 MPa, preferably 42 to 80, more preferably 42 to 75 MPa.

The multimodal polyethylene composition may have a tensile strength at yield from 19 to 30, preferably 20 to 28, and more preferably 21 to 27 MPa measured according to ISO 527.

The multimodal polyethylene composition may have a Charpy impact strength from 23 to 110, preferably 25 to 105 kJ/m$^2$ measured according to ISO 179.

The multimodal polyethylene composition may have a comonomer of from 0.1 to 1.20 % mol, preferably from 0.17 to 1.1 % mol, with respect to the total amount of monomer in the low molecular weight polyethylene, the first high molecular weight polyethylene homopolymer or copolymer, and the second high molecular weight polyethylene homopolymer or copolymer.

The objects are further achieved by an article comprising the multimodal polyethylene composition according to the invention, wherein the article is a casting sheet, a profile extrusion, a film, or a hollow article, such as pipe and tube.

It was surprisingly found that the multimodal polyethylene composition according to the invention with balanced molecular weight shows excellent properties, especially in abrasion resistance, impact strength and good processability.

The multimodal polyethylene composition may comprise the low molecular weight polyethylene, the first high molecular weight polyethylene homopolymer or copolymer, and the second high molecular weight polyethylene homopolymer or copolymer in a total amount selected from the group consisting of at least 70 wt.-%, at least 80 wt.-%, at least 90 wt.-%, at least 95 wt.-%, at least 98 wt.-%, and at least 99 wt.-%, with respect to the total weight of the multimodal polyethylene composition, respectively. The multimodal polyethylene composition may essentially consist of the low molecular weight polyethylene, the first high molecular weight polyethylene homopolymer or copolymer, and the second high molecular weight polyethylene homopolymer or copolymer. The multimodal polyethylene composition may consist of the low molecular weight polyethylene, the first high molecular weight polyethylene homopolymer or copolymer, and the second high molecular weight polyethylene homopolymer or copolymer.

The "viscometer molecular weight" as referred to herein with respect to the constituents (A) to (C), that is, the low molecular weight polyethylene, the first high molecular weight polyethylene homopolymer or copolymer, and the second high molecular weight polyethylene homopolymer or copolymer, in other words, with respect to one of the polyethylene fractions comprised in the inventive multimodal polyethylene composition, is the individual viscometer molecular weight of the respective fraction (that is, the low molecular weight polyethylene, the first high molecular weight polyethylene homopolymer or copolymer, and the second high molecular weight polyethylene homopolymer or copolymer, respectively). This individual viscometer molecular weight is not impacted by other the polyethylene fractions of the multimodal polyethylene composition, especially not by fractions which may be prepared before in a method for preparing the multimodal polyethylene composition. On the other hand, if reference is made to the "total viscometer molecular weight" and the like, reference is made to the respective parameter for the combined polyethylenes in the respective stage.

Preferably, the low molecular weight polyethylene has a viscometer molecular weight (individual viscometer molecular weight), Mv, selected from the group consisting of from 35,000 to 90,000 g/mol; from 35,000 to 80,000 g/mol; from 40,000 to 70,000 g/mol; from 42,000 to 65,000 g/mol; 42,000 to 62,000 g/mol and from 42,150 to 61,060 g/mol.

Preferably, the first high molecular weight polyethylene homopolymer or copolymer has a viscometer molecular weight (individual viscometer molecular weight), Mv, selected from the group consisting of from 750,000 to 3,200,000 g/mol; 800,000 to 3,000,000 g/mol; 800,000 to 2,800,000 g/mol; 850,000 to 2,700,000; 900,000 to 2,650,000 and 918,000 to 2,630,000 g/mol.

Preferably, the second high molecular weight polyethylene homopolymer or copolymer has a viscometer molecular weight (individual viscometer molecular weight, Mv, selected from the group consisting of from 400,000 to 2,800,000 g/mol, 450,000 to 2,600,000 g/mol, 500,000 to 2,500,000 g/mol, 520,000 to 2,400,000 g/mol, and 527,000 to 2,380,000 g/mol.

Preferably, the multimodal polyethylene composition has a viscometer molecular weight of selected from the group consisting of from 520,000 to 858,000 g/mol, 550,000 to 856,000 g/mol or from 590,000 to 854,000 g/mol.

Preferably, the multimodal polyethylene composition has a weight average molecular weight, $M_w$, from 400,000 to 800,000 g/mol.

Preferably, the multimodal polyethylene composition has a number average molecular weight, $M_n$, from 13,000 to 19,000 g/mol.

Preferably, the multimodal polyethylene composition has a molecular weight distribution ($M_w/M_n$; PDI) from 25 to 55, more preferably from 29 to 47.

Preferably, the multimodal polyethylene composition has an intrinsic viscosity selected from the group consisting of from 4.5 to 7.0 dl/g; 4.7 to 6.8 dl/g; 4.8 to 6.7 dl/g; 4.9 to 6.4 dl/g; and 5.0 to 6.4 dl/g.

Preferably, the multimodal polyethylene composition has a percentage abrasion degree of 50 to 70%, preferably 51 to 68 %, more preferably 52 to 67 % with respect to the abrasion degree of comparative example 6, 100% which is PE100 pipe material according to commercially available grade of H1000PC or EP3176213B1 patent that shows long-term time-lag behavior of plastic material over 50 years at 20 °C following to ISO 9080, minimum required stress (MRS) is 10 MPa. The abrasion resistance test of this patent is followed to method of WO2011089017A1 patent, disclosed herein measured according to ISO 15527 which is the method to evaluate the abrasion degree of UHMWPE materials.

Preferably, the multimodal polyethylene composition has a stain hardening modulus, <Gp>, selected from the group consisting of from 40 to 85 MPa; 42 to 80 MPa ; 43 to 79 MPa.

Preferably, the multimodal polyethylene composition has a tensile strength at yield selected from the group consisting of from 19 to 30 MPa; 20 to 28 MPa, 21 to 27 MPa, and 22.0 to 26.6 MPa, measured according to ISO 527, respectively.

Preferably, the multimodal polyethylene composition has a Charpy impact strength selected from the group consisting of from 22 to 110 kJ/m$^2$; 23 to 110 kJ/m$^2$; 25 to 105 kJ/m$^2$; 26 to 103 kJ/m$^2$, and 27 to 102 kJ/m$^2$ measured according to ISO 179, respectively.

Preferably, the multimodal polyethylene composition has viscosity at shear rate 0.01 (1/s) labelled as Eta(0.01) accordingly of $6.5 \times 10^5$ to $47 \times 10^5$ ;$7 \times 10^5$ to $46 \times 10^5$ ; $7 \times 10^5$ to $45 \times 10^5$ kPa.s measured by using control strain rheometer model ARES-G2 TA instrument.

Preferably, the multimodal polyethylene composition has viscosity at shear rate 0.1 (1/s) labelled as Eta(0.1) accordingly of $1.5 \times 10^5$ to $13 \times 10^5$ ; $1.8 \times 10^5$ to $12 \times 10^5$ ;$2 \times 10^5$ to $11 \times 10^5$ kPa.s measured by using control strain rheometer model ARES-G2 TA instrument.

Preferably, the multimodal polyethylene composition has viscosity at shear rate 100 (1/s) labelled as Eta(100) accordingly of 4000 to 8500; 4500 to 8000; 5,000 to 7,500 kPa.s measured by using control strain rheometer model ARES-G2 TA instrument.

The comonomer of the first high molecular weight polyethylene copolymer and of the second high molecular weight polyethylene copolymer can be independently selected from $C_4$ to $C_{12}$ $\alpha$-olefin, preferably can be independently selected from 1-butene and 1-hexene. It may be provided that the first high molecular weight polyethylene copolymer and of the second high molecular weight polyethylene copolymer comprise only one type of $\alpha$-olefin, respectively. It may be provided that the first high molecular weight polyethylene copolymer and of the second high molecular weight polyethylene copolymer comprise only one type of $\alpha$-olefin and both comprise the same type of $\alpha$-olefin, for example both comprise 1-butene comonomer.

The objects are further achieved by hollow article, such as a pipe, comprising the multimodal polyethylene composition according to the present invention.

The multimodal polyethylene composition of the invention may be produced in a multistage process wherein fractions (A), (B) and (C), that is, the low molecular weight polyethylene, the first high molecular weight polyethylene homopolymer or copolymer, and the second high molecular weight polyethylene homopolymer or copolymer, are produced in subsequent stages. In such a case, the properties of the fractions produced in the second step or the third step (or further steps) of the multistage process can either be inferred from polymers which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagstrom, Conference on Polymer Processing (The Polymer Processing Society), Extended Abstracts and Final Programme, Gothenburg, August 19 to 21, 1997, 4: 13.

Thus, although not directly measurable on the multistage process products, the properties of the fractions produced in higher stages of such a multistage process can be determined by applying either or both of the above methods. The skilled person will be able to select the appropriate method. One particular way of calculating the properties, such as the molecular weight (such as Mv) is applying a deconvolution process using Excel or other calculation programs. In the deconvolution process subtraction of the respective signals is carried out.

Polyethylenes, such as HDPEs, produced in a multistage process are also designated as "in- situ" blends. The resulting end product consists of an intimate mixture of the polymers from the three or more reactors, the different molecular-weight-distribution curves of these polymers together forming a molecular-weight-distribution curve having a broad maximum or two or three or more maxima.

Multimodal polyethylene compositions in accordance with the invention may, for example, be prepared as described in the specification of EP3293205B1.Especially, the multimodal polyethylene composition according to the invention may be prepared by multimodal polyethylene polymerization process, comprising;

Providing a reactor system comprising:

(a) a first reactor;

(b) a hydrogen removal unit arranged between the first reactor and a second reactor comprising at least one vessel connected with a depressurization equipment, preferably selected from vacuum pump, compressor, blower, ejector or a combination thereof, the depressurization equipment allowing to adjust an operating pressure to a pressure in a range of 100 - 200 kPa (abs);

(c) the second reactor; and

(d) a third reactor;

the process comprising (in this sequence);

(a) polymerizing ethylene in an inert hydrocarbon medium in the first reactor in the presence of a catalyst system, selected from Ziegler-Natta catalyst or metallocene, and hydrogen in an amount of 0.1-95% by mol with respect to the total gas present in the vapor phase in the first reactor to obtain a low molecular weight polyethylene or a medium molecular weight polyethylene;

(b) removing in the hydrogen removal unit 98.0 to 99.8, preferably 99.1 % by weight of the hydrogen comprised in a slurry mixture obtained from the first reactor at a pressure in the range of 103-145 kPa (abs) and transferring the obtained residual mixture to the second reactor;

(c) polymerizing ethylene and optionally $C_4$ to $C_{12}$ $\alpha$-olefin comonomer in the second reactor in the presence of a catalyst system, selected from Ziegler-Natta catalyst or metallocene, and in the presence of hydrogen in an amount obtained in step (b) to obtain a first high molecular weight polyethylene in the form of a homopolymer or a copolymer and transferring a resultant mixture to the third reactor; and

(d) polymerizing ethylene and optionally $\alpha$-olefin comonomer in the third reactor in the presence of a catalyst system, selected from Ziegler-Natta catalyst or metallocene, and hydrogen, wherein the amount of hydrogen in the third reactor is in a range of 0.1-70% by mol, preferably 1-60% by mol, with respect to the total gas present in the vapor phase in the third reactor or optionally substantial absence of hydrogen to obtain a second high molecular weight polyethylene homopolymer or copolymer.

Preferably, the depressurization equipment allows to adjust the operating pressure in the hydrogen removal unit to a pressure in the range of 103 - 145 kPa (abs), preferably 104 -130 kPa (abs), most preferably 105 to 115 kPa (abs)

Preferably, the hydrogen removal unit further contains a stripping column for the separation of hydrogen and a liquid diluent.

"Substantial absence" in this regard means that hydrogen is only comprised in the third reactor in an amount which cannot be avoided by technical means.

The low molecular weight polyethylene homopolymer having a viscometer molecular weight (Mv) of 35,000 to 90,000 g/mol may be referred to herein as the constituent (A). The first high molecular weight polyethylene homopolymer or copolymer having a viscometer molecular weight (Mv) from 750,000 to 3,500,000 g/mol may be referred to herein as the constituent (B). The second high molecular weight polyethylene homopolymer or copolymer having a viscometer molecular weight (Mv) from 400,000 to 3,000,000 g/mol may be referred to herein as the constituent (C).

In case that the first high molecular weight polyethylene, constituent (B), is a copolymer, the comonomer copolymerized together with the polyethylene may be a $C_4$ monomer (butene) and/or $C_6$ monomer (hexene). The amount of comonomer in the copolymer may be from 0.16 to 1.20 % by mol, with respect to the total amount of monomer in the copolymer.

In case that the second high molecular weight polyethylene, constituent (C), is a copolymer, the comonomer copolymerized together with the polyethylene may be a $C_4$ monomer (butene) and/or $C_6$ monomer (hexene). The amount of comonomer in the copolymer may be from 0.16 to 1.20 % by mol, with respect to the total amount of monomer in the copolymer.

The comonomer can be selected from butene-1 or hexene-1.

The total amount of comonomer in the multimodal polyethylene composition may be from 0.16 to 1.20 % mol, preferably 0.17 to 1.10% mol, based on the total amount of the multimodal polyethylene composition.

## Polymerization conditions

The inventive multimodal polyethylene may be prepared by a process for producing a multimodal polyethylene composition known in the art, for example using conditions as set forth in Table 1 and Table 2. The comparative and inventive examples shown herein were produced by using either a small-scale reactor or a large scale reactor as described in the following in detail.

### Small-scale reactor

The multi-modal polymerization was carried out in a 10 liters autoclave reactor using 6 liters purified n-hexane as a diluent. The Ziegler-Natta catalyst was described in the Hungarian patent application number 0800771R, especially in example 1 thereof. The used amount of catalyst as shown in Table 1 or 2 was added. The triethylaluminum were introduced. Thereafter, the temperature was heated to desired value and ethylene feeding was started. Hydrogen was dosed to reactor for adjusting intrinsic viscosity of produced polymer in first reactor. Ethylene was fed continuously with keeping a total pressure of reaction. When desired amount of powder is made, the polymerization was stopped by releasing pressure and cooling down the slurry content. The second stage of the reaction was started by raising the temperature to desired value. Ethylene was fed continuously with keeping a total pressure of reaction. Optionally, $C_4$ to $C_{12}$ $\alpha$-olefin comonomer was added in this step if a copolymer was produced in second stage. The polymerization was stopped when a blending ratio of second stage had been reached. The polymerization was stopped by releasing pressure and cooling down the slurry content. The third stage of the reaction was started by raising the temperature to desired value. Ethylene was fed continuously with keeping a total pressure of reaction. Optionally, $C_4$ to $C_{12}$ $\alpha$-olefin comonomer was added in this step if a copolymer was produced in third stage. The polymerization was stopped when a blending ratio of second stage had been reached. Polymerization was stopped by releasing pressure and cooling down the slurry content. The blending ratio can be calculated directly by comparing the amount of ethylene uptake during the different stages of polymerization.

The unimodal polymerization was also carried out in a 10 liters autoclave reactor using 6 liters purified n-hexane as a diluent. The Ziegler-Natta catalyst was described in the Hungarian patent application number 0800771R, especially in comparative example 9 thereof. The used amount of catalyst as shown in Table 2 was added. The triethylaluminum were introduced. Thereafter, the temperature was heated to desired value and ethylene feeding was started. Ethylene was fed continuously with keeping a total pressure of reaction. When desired amount of powder is made, the polymerization was stopped by releasing pressure and cooling down the slurry content.

### Large-scale reactor

The polymerization was carried out in a continuous process using three reactors connected in series. The Ziegler Natta Catalyst was described in the Hungarian patent application number0800771R, especially in example 1 thereof. The used amount of catalyst as shown in Table 1 or 2 was introduced into the first reactor together with sufficient amount of hexane and triethylaluminum as co-catalyst. Amount of ethylene and hydrogen was set so that the polymer composition and intrinsic viscosity of the first reactor achieved the desired value.

The polymer slurry from the first reactor was depressurized before being transferred to the second reactor in which the unreacted gas has been removed. The polymerization in the second reactor is continued by feeding the ethylene that was set so that the polymer composition achieved the desired value. Optionally, $C_4$ to $C_{12}$ $\alpha$-olefin comonomer was also fed in the second reactor for producing copolymer.

The polymer slurry from the second reactor was then transferred to the third reactor. The polymerization in the third reactor is continued by feeding the ethylene that was set so that the polymer composition achieved the desired value. Optionally, $C_4$ to $C_{12}$ $\alpha$-olefin comonomer was also fed in the third reactor for producing copolymer. Optionally, hydrogen was fed to control intrinsic viscosity of the third reactor to the desired value.

The powder leaving the third reactor was separated from the solvent and dried.

**Definition and Measurement Methods**

$MI_5$: Melt flow index (MI) of polymer was measured according to ASTM D 1238 and indicated in g/10 min that determines the flowability of polymer under testing condition at 190°C with load 5 kg ($MI_5$).

Density: Density of polyethylene was measured by observing the level to which a pellet sinks in a liquid column gradient tube, in comparison with standards of known density. This method is determination of the solid plastic after annealing at 120°C follow ASTM D 1505 and showed in g/cm$^3$ unit.

Molecular weight and Polydispersity index (PDI): The weight average molecular weight (Mw), the number average molecular weight (Mn) and the Z average molecular weight (Mz) in g/mol in g/mol were analyzed by gel permeation chromatography (GPC). Polydispersity index was calculated by Mw/Mn. Around 8 mg of sample was dissolved in 8 ml of 1,2,4-trichlorobenzene at 160°C for 90 min. Then the sample solution, 200 μl, was injected into the high temperature GPC with $IR_5$, an infrared detector (Polymer Char, Spain) with flow rate of 0.5 ml/min at 145°C in column zone and 160°C in detector zone. The data was processed by GPC One® software, Polymer Char, Spain.

Intrinsic Viscosity (IV): The test method covers the determination of the dilute solution viscosity of polyethylene at 135 °C or an ultra high molecular weight polyethylene (UHMWPE) at 150°C. The polymeric solution was prepared by dissolving polymer in Decalin with 0.2% wt/vol stabilizer (Irganox 1010 or equivalent). The details are given for the determination of IV according to ISO 1628.

Viscometer molecular weight

The viscometer molecular weight (MV) is calculated based on the IV determined as described above equation (I) below:

$$Mv = 5.37 \times 10^4 \times (IV)^{1.49} \qquad (I)$$

where Mv is the viscometer molecular weight and the unit of Mv is (g/mol), IV is the intrinsic viscosity (dl/g).

Individual molecular weight calculation and individual intrinsic viscosity

The multimodal polyethylene composition of the invention is produced in a multistage process wherein fractions (A), (B) and (C) are produced in subsequent stages. In such a case, the properties of the fractions produced in the second step or the third step (or further steps) (also referred to as "individual properties) of the multistage process can either be inferred from polymers which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagstrom, Conference on Polymer Processing (The Polymer Processing Society), Extended Abstracts and Final Programme, Gothenburg, August 19 to 21, 1997, 4: 13.

Thus, although not directly measurable on the multistage process products, the properties of the fractions produced in higher stages of such a multistage process can be determined by applying either or both of the above methods. The skilled person will be able to select the appropriate method. One particular way of calculating the properties, such as the viscometer molecular weight (such as Mv) is applying a deconvolution process using Excel or other calculation programs. In the deconvolution process subtraction of the respective signals is carried out.

Polymer HDPEs produced in a multistage process are also designated as "in-situ" blends. The resulting end product consists of an intimate mixture of the polymers from the three or more reactors, the different molecular-weight-distribution curves of these polymers together forming a molecular-weight-distribution curve having a broad maximum or two or three or more maxima.

The calculation of individual IV and individual Mv of each example in reactors 1, 2 and 3 is shown in Table 1 and 2.

Comonomer content: The comonomer content was determined by high resolution $^{13}$C-NMR. 13C-NMR spectra were recorded by 500 MHz ASCENDTM, Bruker, with cryogenic 10 mm probe. TCB was used as major solvent with TCE-d2 as locking agent in the ratio of 4:1 by volume. The NMR experiments were carried on at 120°C, and the inverse gate 13C (zgig) of pulse program with 90° for pulse angle were used. The delay time (Di) was set to 10 seconds for full-spin recovery. Finally, the comonomer content is calculated in %mol unit with respect to the total amount of monomer in the polyethylene composition.

Viscosity at shear rate 0.01, 0.1 and 100 (1/s) Rheological parameters are determined by using control strain rheometer model ARES-G2 TA instrument. The geometry is Plate-Plate 8 mm diameter. The measurement gap was defined at 1 mm. The dynamic oscillation shear performed at angular frequency during 0.1 to 200 rad/s at temperature 190°C under nitrogen atmosphere. the sample preparation was prepared by compression molding at 190°C. Viscosity at 0.01, 0.1 and 100 1/s labelled as Eta(0.01), Eta(0.1) and Eta(100) which were obtained by cox-merz transformation of complex viscosity at a specific angular frequency as same method as patent US20170369612A1. The viscosity at any shear rate showed in the unit kPa.s.

Charpy impact strength: Charpy impact strength is determined according to ISO 179 at 23 °C and shown in the unit $kJ/m^2$.

Pressure resistance (Pipe Pressure Test); The pressure test on un-notched 32 mm SDR 11 pipes having a length of 450 mm is carried out in water-inside and water-outside environment according to ISO 1167- 1 :2006. End caps type A were used. The time to failure is determined in hours. A hoop stress of 12.4 MPa and a temperature of 20 °C as well as a hoop stress of 5.7 MPa and a temperature of 80 °C were applied.

Tensile strength at yield (TSY): The tensile testing was performed by elongating a specimen and measured the load carrier following the specimen dimension using Universal testing machine. A variety of tensile properties can be extracted from the stress-strain curve. Tensile strength at yield, TSY (in MPa) was determined on the same samples according to ISO 527-2. The measurement was conducted at 23 °C temperature with an elongation rate of 50 mm/min.

The rapid crack propagation (RCP) resistance of a pipe; RCP may be evaluated according to a method called the S4 test (Small Scale Steady State) and which is described in ISO 13477:2008. The outer diameter of the pipe is 110 mm and wall thickness 10 mm or greater. While the exterior of the pipe is at ambient pressure (atmospheric pressure), the pipe is pressurized internally, and the internal pressure in the pipe is kept constant at a pressure of 10.0 bar positive pressure. A knife projectile is shot, with specific forms towards the pipe close to its one end in the so-called initiating zone in order to start a rapidly running axial crack. The speed of the knife is 16 +/- 1 m/s. The initiating zone is provided with an abutment for avoiding unnecessary deformation of the pipe. The test equipment is adjusted in such a manner that crack initiation takes place in the material involved, and a number of tests are affected at varying temperatures. The axial crack length in the measuring zone, having a total length of 4.7 diameters, is measured for each test and is plotted against the set test pressures (0-10 bar). If the crack length exceeds 4.7 diameters, the crack is assessed to propagate. If the pipe passes the test at a given temperature, the temperature is lowered successively until a temperature is reached, at which the pipe no longer passes the test, i.e. the crack propagation exceeds 4.7 times the pipe diameter. In this patent, the crack arrest of pipes was reported as the unit of millimeters.

Strain hardening modulus <Gp>: Strain hardening modulus can be determined according to ISO 18488:2015(E). In brief, compressed sheet was prepared from compounded pellet by using compression molding at 180 °C. The compressed sheet thickness shall be in the range of 0.3+0.05/-0.03 mm. After pressing, the samples are annealed at 120 °C for 1 hour. Then, slowly cooled down the sample to room temperature with cooling rate of less than 2 °C/min. The test specimens are punched from the pressed sheets following the ISO 1872-2. The measurement is in principle a standard tensile test with 200N load cell. Prior to the testing, the specimen is kept at 80 °C for 30 min to allow thermal equilibrium. The test specimen is extended at constant speed 20 mm/min until the true strain reaches 12. The strain hardening modulus <Gp> is calculated as the average difference quotient:
The average runs over all N difference quotients:

$$< Gp >= \frac{1}{N} \sum_{i=1}^{N} \frac{\sigma_{i+1} - \sigma_i}{\lambda_{i+1} - \lambda_i} \qquad (II)$$

The calculation of <Gp> is performed typically between draw ratio 8 and 12 and expressed in unit MPa.

Abrasion resistance: Preparation of specimen was done based on ISO 11542-2 with sample size of 25.4 mm x 76.2 mm x 6.35 mm with the hole of 6 mm at the center of specimen. Abrasion test was determined according to 15527. The sample was stirred in the slurry with high speed 1200 rpm for 24 hours. The abrasion resistance of sample was determined as equation (III) follows:

$$\%L = (A - B)/C * 100 \qquad (III)$$

where A is weight of test specimen before abrasion, in [g], B is weight of test specimen after abrasion and C is the weight loss of referent material which is CE6, PE100 was used as referent material to compare to both inventive and comparative examples in this patent. The abrasion degree, L, is reported in the unit %.

Pipe extrusion process: Pipe samples (comparative example 6, CE6 and inventive example 1, IE1) with outer diameter 32 mm and 110 mm were prepared by using CINCINATI EXRUSION ALPHA 60, single screw extruder, screw diameter 60 mm, L/D 28. The barrel temperature was set at 190 °C and the die temperature was set at 200 °C. Both CE6 and IE1 pipe were produced by using the sample processing conditions without any additional tools. **Experimental and examples**

### Examples

To prepare an inventive pipe or tube from the above compositions, it was found that a sub-range of multimodal polyethylene compositions which might be obtained using the inventive reactor system by polymerization in small-scale reactor and large-scale reactors, are particularly preferred. In detail, the compositions suitable to form the inventive pipe are as follows and have the following properties. The following comparative examples refer to the pipe related compositions.

The inventive and comparative examples were prepared following to the process conditions explained in Table 1 and Table 2. Most of inventive examples were prepared in the way to provide improved abrasion resistance, impact resistance, tensile properties by an increase of molecular weight in the polymer composition which is higher than normal HDPE PE100 pipe range. With multi-modal technology and balanced low molecular weight in the polymer composition resulting in all inventive examples can be processed by using conventional pipe extrusion machine which is confirmed by supporting rheological results of Eta (100) in Table 3 and Table 4.

Inventive Example 1 (IE1)

The inventive example 1 (IE1) was produced to make the multimodal polyethylene composition with blending ratio (49/25/26) in the large-scale reactor using the protocol disclosed above and the amounts of reactants as shown in Table 2. A low molecular weight polyethylene homopolymer was produced in the first reactor to obtain a low molecular weight portion. The low molecular weight polymer was then transferred to the second reactor to produce a first high molecular weight polyethylene. Finally, the polyethylene mixture obtained this way was transferred from second reactor to the third reactor to create a second high molecular weight polymer. The second and third reactors were operated under hydrogen depleted polyethylene polymerization and butene-1 comonomer was fed into the reactors to improve slow crack growth property. The multimodal polyethylene composition according to IE1 has an IV of 5.4 dl/g with butene-1 comonomer content, 0.18%. The composition of IE1 was used to produce a pipe sample using conventional pipe extrusion machine as previously describe in pipe extrusion process. The pipe performance of IE1 pipe samples were evaluated on pressure resistance and rapid crack propagation as shown below.

- Pressure test at 20 °C with hoop stress 12.4 (MPa) according to ISO 9080 is 1,238 h.

- Pressure test at 80 °C with hoop stress 5.4 (MPa) according to ISO 9080 at least 2,847 h.

- Rapid crack propagation (RCP) of pipe (OD 110, SDR11) with pressure 10 bar at 0 °C according to ISO13477 was zero meaning that the sample pipe has no crack arrest or crack propagation.

For the CE6, PE100 pipe material shows significantly shorter life time than IE1 pipe after testing the pressure resistance at hoop stress 12.4 MPa (20 °C) and 5.4 MPa (80 °C), 120 h and 500 h, respectively.

Inventive Example 2 (IE2)

The inventive example 2 (IE2) was carried out in the same manner as IE1 with different blending composition (50/18/32). The inventive example 2 (IE2) with IV of 5.7 dl/g with the highest butene-1 comonomer content, 0.99% was obtained.

Inventive Example 3 (IE3)

The inventive example 3 (IE3) was produced in the same manner as IE1 and IE2 with different blending composition (30/15/55) in small-reactor scale as shown in Table 2. The percentage of 1-butene comonomer incorporation of finished product is 0.40% mol. The E3 with IV of 6.4 dl/g was obtained. In addition, IE3 shows the highest Charpy impact resistance, 101.4 kJ/m2 compared to other inventive examples.

Inventive Example 4 (IE4)

The inventive example 4 (IE4) was carried out in the same manner as IE1, IE2 and IE3 but the polymerization reaction was synthesized in small-scale reactor with different by adjusting the composition of multimodal (60/10/30) and polymerization condition. The low molecular weight portion of IE4 is 60% which is the highest content compared to other inventive examples resulting in the tensile strength at yield (TSY) increases higher than CE6, PE100 materials and other inventive examples. The inventive example 4 (IE4) with IV of 5.7 dl/g with butene-1 comonomer content, 0.28% was obtained.

Inventive Example 5 (IE5)

The inventive example 5 (IE5) was carried out in the same manner as IE1, IE2, IE3, and IE4 but the polymerization reaction was synthesized in small-scale reactor with different blending composition (30/40/30). The inventive example 5 (IE5) with IV of 6.1 dl/g with the butene-1 comonomer content, 0.42% was obtained.

Inventive Example 6 (IE6)

The inventive example 6 (IE6) was carried out in the same manner as IE1, IE2, IE3, IE4, and IE5 but the polymerization reaction was synthesized in small-scale reactor with different blending composition (30/15/55). The inventive example 6 (IE6) with IV of 5.0 dl/g with the hexene-1 comonomer content, 0.35% was obtained.

Inventive Example 7 (IE7)

The inventive example 7 (IE7) was carried out in the same manner as IE1, IE2, IE3, IE4, IE5 and IE6 but the polymerization reaction was synthesized in small-scale reactor with different blending composition (30/15/55). The inventive example 7 (IE7) with IV of 6.4 dl/g with the highest hexene-1 comonomer content, 0.28% was obtained.

Comparative Example 1 (CE1)

The comparative example 1 (CE1) was carried out in the same manner as IE1 but the polymerization reaction was synthesized in small-scale reactor with different blending composition (49/25/26). The comparative example 1 (CE1) with IV of 4.1 dl/g with butene-1 comonomer content, 0.34% was obtained. The IV of CE1 is lower than all inventive examples so the abrasion degree is high, 73%, in other words, poor abrasion resistance compared to inventive examples.

Comparative Example 2 (CE2)

The comparative example 2 (CE2) was carried out in the same manner as IE1 but the polymerization reaction was synthesized in small-scale reactor with different blending composition in claim range (30/15/55). The comparative example 2 (CE2) with IV of 13.3 dl/g with butene-1 comonomer content, 0.31% was obtained. The CE2 shows the highest IV (higher than upper limit claim range) compared to all inventive and comparative examples so it cannot be processed with conventional pipe extrusion process. The reason is too high melt viscosity resulting in material cannot flow in the complex spiral die as all inventive examples.

Comparative Example 3 (CE3)

The comparative example 3 (CE3) was carried out in the same manner as IE1 but the polymerization reaction was synthesized in small-scale reactor with different blending composition in claim range (45/25/30). The comparative example 3 (CE3) with IV in claim range of 4.7 dl/g with butene-1 comonomer content, 0.14% mol was obtained (that is lower than prefer claim range) shown poor strain hardening modulus, <Gp>, 22 MPa that is less than PE100 material.

Comparative Example 4 (CE4)

The comparative example 4 (CE4) was carried out in the same manner as IE1 but the polymerization reaction was synthesized in small-scale reactor with different blending composition (30/15/55). The comparative example 4 (CE4) with IV of 4.8 dl/g with butene-1 comonomer content, 1.50 % mol was obtained.
The CE4 shows the highest butene-1 comonomer incorporation content that can cause a decrease of tensile strength at yield (TSY) of CE4 having lowest value, 18.3 MPa compared to others.

Comparative Example 5 (CE5)

The comparative example 5 (CE5) was carried out in the same manner as IE1 but the polymerization reaction was synthesized in small-scale reactor with different blending composition not in claim range (20/50/30). The comparative example 5 (CE5) with IV of 6.8 dl/g with the butene-1 comonomer content, 0.36% was obtained. Too low molecular weight portion in reactor 1, 20% can cause a decrease of tensile strength at yield below 22 MPa (PE100 material).

Comparative Example 6 (CE6)

The comparative example 6 (CE6 is PE100 that is commercially available grade name of H1000PC) is the bimodal polyethylene comprises LMW portion of 55 % by wt. and HMW portion of 45 % by weight. This is a PE100 material that is used for reference of invention examples. PE100 material has important mechanical properties such as tensile strength at yield (TYS), 22 MPa, impact resistance, 23.9 kJ/m$^2$, strain hardening modulus <Gp>, 42 MPa and abrasion degree, 100% which are directly related to pipe performance (MRS, SCG, RCP and abrasion resistance).
The comparative example 6 (CE6) was carried out in the same manner as IE1 but the polymerization reaction was synthesized in large-scale reactor with different blending composition (55/45). The comparative example 6 (CE6) with IV of 3.2 dl/g with the butene-1 comonomer content, 0.66% was obtained. This material is used for PE100 pipe production that shows characteristics of physical, mechanical, rheological PE100 properties. It is used as the reference to compare with all inventive examples, especially, processability with conventional pipe extrusion process. The pipe performance of CE6 pipe samples were evaluated on pressure resistance and rapid crack propagation as shown below.

- Pressure test at 20 °C with hoop stress 12.4 (MPa) according to ISO 9080 is 120 h.

- Pressure test at 80 °C with hoop stress 5.4 (MPa) according to ISO 9080 at least 500 h.

- Rapid crack propagation (RCP) of pipe (OD 110, SDR11) with pressure 10 bar at 0 °C according to ISO13477 having crack arrest, 128 mm.

Comparative Example 7 (CE7)

The comparative example 7 (CE7) was carried out in the same manner as IE1 but the polymerization reaction was synthesized in large-scale reactor with different blending composition of bimodal polyethylene (blending ratio of LMW to HMW is 50:50). The comparative example 7 (CE7) with IV of 6.5 dl/g without comonomer incorporation. Even CE7 has high molecular weight but there is no copolymer structure in the material resulting that CE7 exhibits low SHT value, 29 MPa which is lower than PE100, CE6.

Comparative Example 8 (CE8)

The comparative example 8 (CE8) was carried out in the same manner as IE1 but the polymerization reaction was synthesized in large-scale reactor with different blending composition (12/30/58). The comparative example 8 (CE8) with IV of 9.0 dl/g without comonomer incorporation. The strain hardening modulus of CE8 is lower that PE100 material.

Comparative Example 9 (CE9)

The comparative example 9 (CE9) was carried out synthesized in small-scale reactor with unimodal mode. The comparative example 9, unimodal polyethylene (CE9) with IV of 12.0 dl/g without comonomer incorporation.
The inventive samples E1 to E7 were produced by multimodal polymerization process in small to large scale reactors with various IV ranges from 5.0 to 6.4 dl/g which provides significant improvement on mechanical properties; abrasion resistance, tensile properties, impact strength which is close to PE100 and some properties are higher than PE100 materials. All inventive examples show good processability and can be processed by using conventional pipe extrusion machine.

The abrasion resistance of inventive examples is improved by an increase of molecular weight in the polymer composition. IE1-IE7 show low abrasion degree below 67% which is better than for PE100 material (CE6), used as a standard with an abrasion degree of 100%. The crucial achievement of the present invention is the polymer design optimization to achieve all mechanical, physical, rheological properties close to PE100 material requirements. Therefore, the multimodal reactors with comonomer incorporation was used to optimize polymer architecture to achieve balanced important PE100 properties such as minimum required strength (MRS), slow crack growth (SCG) and rapid crack propagation (RCP).

The processability is improved by an optimization of the amount of LMW and HMW1 and HMW2 in the multimodal polyethylene composition and the Mv of final product. It is well-know that materials with too high HMW portion can face processing problems such as melt fracture, high torque, and high back pressure etc. Surprisingly, even though IE1-IE7 have high IV values in the range of 5.0-6.4 dL/g but they can be processed with normal extrusion without processing problems.

In addition, the viscosity at high shear rate, 100 s$^{-1}$, Eta(100) value can be used to explain the processing or melt flow behavior of polymeric materials, especially, pipe extrusion process. The shear rate at the end of spiral die could be calculated in wide range starting from 10 to 200 s$^{-1}$ depending on volume flow rate of polymer melt, die gap, pipe size and other processing parameters. It can be clearly seen that the IE1-IE7 having Eta(100) in the range of 5,131 to 7,033 kPa.s which can be practically extruded to prepare pipe samples by using single screw pipe extruder. Moreover, they also have good tensile properties and strain hardening modulus, <Gp> as close as PE100 and have an excellence in impact and abrasion resistance compared to CE6, PE100. In the other hand, some comparative examples having Eta(100) in the same range of inventive examples, 5,131 to 7,033 kPa.s, they also can be extruded with pipe extrusion machine as well but some important mechanical properties are decreased, for example, CE1 with Eta(100), 4,439 kPa.s shows a high abrasion degree, 73% and CE4 with Eta(100), 5,403 kPa.s containing the highest % comonomer content, 1.5 % shows low tensile strength at yield (TSY) below 22.0 MPa and CE5 with Eta(100), 7,007 kPa.s shows a lower TSY, 21.0 MPa compared to all inventive examples. Moreover, too high Eta(100), 16,063 kPa.s of CE9, the material cannot flow event in the wide cavity and narrow channel because it has extremely high melt viscosity blocked in the pipe die head. The operator may face with high back pressure problems which is one of the causes that pipe extrusion machine can be malfunction.

Eta(0.01) and Eta(0.1) having the shear rate value are close to zero called zero-shear viscosity, the prevalent equation in literature is

$$\text{Eta(0)} \, \alpha \, k \, \text{Mw}^{3.4} \qquad \text{(IV)}$$

where Eta(0) is zero-shear viscosity, Mw is the weight-average molecular weight, and k is a constant that is specific to the polymer being assessed. From equation IV, materials having the highest Eta(0.01) is CE9, 29,586,150 kPa.s. This material has an excellence in abrasion resistance compared to both comparative and inventive examples, but its processability is worst due to high melt viscosity.

To balance of slow crack growth resistance properties, butene-1 and hexene-1 are chosen as the comonomer for all inventive examples. In table 4, it can be clearly seen that IE1-IE7 using butene-1 and hexene-1 as comonomer exhibit good mechanical properties, especially strain hardening modulus <Gp> as close as PE100.

The representative inventive example, IE1 was selected to produce pipe samples by using conventional pipe extrusion machine. The real pipe samples were compared to PE100 pipe samples, CE6 in terms of pressure resistance and rapid crack propagation. It can be seen that IE1 pipe samples show extraordinary high-pressure resistance and rapid crack propagation as shown in Table 4.

It can be clearly seen that inventive examples comprising three different fractions to form the multimodal polyethylene as claimed can promote abrasion resistance, processability and impact strength. All the results indicate advantages of the inventive examples over the comparative examples.

Table 1 polymerization condition of comparative Examples

| Example name | | CE1 | CE2 | CE3 | CE4 | CE5 | CE6 | CE7 | CE8 | CE9 |
|---|---|---|---|---|---|---|---|---|---|---|
| Operation Mode | | MULTI | MULTI | MULTI | MULTI | MULTI | MULTI | MULTI | MULTI | UNI |
| Polymer composition | $W_A$ (%) | 49 | 30 | 45 | 30 | 20 | 55 | 50 | 12 | 100 |
| | $W_B$ (%) | 25 | 15 | 25 | 15 | 50 | 45 | 50 | 30 | - |
| | $W_C$ (%) | 26 | 55 | 30 | 55 | 30 | - | - | 58 | - |
| Catalyst | Catalyst feed (kg Cat / tonC2 total) | 0.16 | 0.03 | 0.08 | 0.08 | 0.03 | 0.06 | 0.21 | 0.16 | 0.11 |
| First Reactor | Pressure total (barg) | 4.4 | 8.0 | 3.5 | 7.0 | 8.0 | 5.1 | 1.3 | 0.8 | 3.0 |
| | C2 feed (kg C2 / tonC2 total) | 490 | 300 | 450 | 300 | 200 | 557 | 500 | 120 | 1000 |
| | H2 feed (kgH2 / tonC2 at reactor 1) | 0.56 | 3.73 | 0.47 | 2.54 | 5.27 | 0.82 | 0.23 | 0.77 | - |
| | Temperature (°C) | 80 | 85 | 83 | 85 | 85 | 85 | 72 | 67 | 85 |
| | Individual IV (dL/g) | 1.1 | 1.0 | 0.9 | 1.0 | 0.9 | 0.6 | 1.8 | 1.4 | 12.0 |
| | Individual Mv (g/mol) | 61,894 | 51,317 | 45,898 | 53,700 | 45,898 | 27,617 | 128,923 | 88,655 | 2,259,087 |
| Second Reactor | Pressure total (Barg) | 2.2 | 2.5 | 1.6 | 2.5 | 2.5 | - | - | 1.8 | - |
| | C2 feed (kgC2 / tonC2 total) | 250 | 150 | 250 | 150 | 500 | - | - | 300 | - |
| | Temperature (°C) | 75 | 75 | 70 | 75 | 75 | - | - | 62 | - |
| | Comonomer type | butene-1 | butene-1 | butene-1 | butene-1 | butene-1 | - | - | - | - |
| | Comonomer feed (kgC4 / tonC2 at reactor 2) | 3.6 | 10.7 | 0.0 | 53.5 | 10.0 | - | - | - | - |
| | Individual IV (dl/g) | 7.0 | 12.2 | 8.2 | 8.5 | 10.7 | - | - | 6.7 | - |
| | Individual Mv (g/mol) | 979,527 | 2,220,881 | 1,230,203 | 1,302,592 | 1,835,507 | - | - | 917,814 | - |
| | IV total (dL/g) | 3.1 | 4.7 | 3.5 | 3.5 | 7.9 | - | - | 6.4 | - |
| | Mv total (g/mol) | 289,803 | 538,766 | 347,245 | 347,245 | 1,167,989 | - | - | 626,353 | - |

(continued)

| | Example name | CE1 | CE2 | CE3 | CE4 | CE5 | CE6 | CE7 | CE8 | CE9 |
|---|---|---|---|---|---|---|---|---|---|---|
| Third Reactor | Pressure total (Barg) | 1.2 | 3.5 | 3.1 | 5.5 | 4.0 | 3.0 | 1.7 | 1.3 | - |
| | C2 feed (kgC2 / tonC2 total) | 260 | 550 | 300 | 550 | 300 | 454 | 500 | 580 | - |
| | Temperature (°C) | 73 | 78 | 70 | 83 | 83 | 75 | 75 | 62 | - |
| | Comonomer type | butene-1 | butene-1 | butene-1 | butene-1 | butene-1 | butene-1 | - | - | - |
| | Comonomer feed (kgC4 / tonC2 at reactor 3) | 24.7 | 60.6 | 0.0 | 5.1 | 94.4 | 36.6 | - | - | - |
| | H2 feed (kgH2 / tonC2 at reactor 3) | 16.00 | 0.00 | 0.69 | 0.08 | 0.79 | 0.01 | 0.00 | 0.00 | - |
| | Individual IV (dl/g) | 6.9 | 20.3 | 7.5 | 5.9 | 4.2 | 6.3 | 7.6 | 11.8 | - |
| | Individual Mv (g/mol) | 964,214 | 4,778,609 | 1,080,975 | 749,106 | 461,032 | 839,368 | 1,907,532 | 2,110,696 | - |
| | IV total (dL/g) | 4.1 | 13.3 | 4.7 | 4.8 | 6.8 | 3.2 | 6.5 | 9.0 | - |
| | Mv total (g/mol) | 439,564 | 2,538,126 | 538,766 | 555,935 | 934,141 | 303,842 | 851,472 | 1,418,390 | - |

Table 2 Polymerization condition of inventive Examples

| Example name | | IE1 | IE2 | IE3 | IE4 | IE5 | IE6 | IE7 |
|---|---|---|---|---|---|---|---|---|
| Operation Mode | | MULTI | MULTI | MULTI | MULTI | MULTI | MULTI | MULTI |
| Polymer composi tion | $W_A$ (%) | 49 | 50 | 30 | 60 | 30 | 30 | 30 |
| | $W_B$ (%) | 25 | 18 | 15 | 10 | 40 | 15 | 15 |
| | $W_c$ (%) | 26 | 32 | 55 | 30 | 30 | 55 | 55 |
| Catalyst | Catalyst feed (kg Cat / tonC2 total) | 0.15 | 0.02 | 0.03 | 0.04 | 0.03 | 0.09 | 0.09 |
| First Reactor | Pressure total (barg) | 5.4 | 8.0 | 8.0 | 8.0 | 8.0 | 7.0 | 7.0 |
| | C2 feed (kg C2 / tonC2 total) | 490 | 500 | 300 | 600 | 300 | 300 | 300 |
| | H2 feed (kgH2 / tonC2 at reactor 1) | 1.2 | 1.5 | 3.7 | 2.0 | 3.7 | 2.7 | 2.7 |
| | Temperature (°C) | 80 | 85 | 85 | 85 | 85 | 85 | 85 |
| | Individual IV (dL/g) | 0.9 | 1.1 | 1.0 | 0.9 | 0.9 | 0.9 | 0.9 |
| | Individual Mv (g/mol) | 48,196 | 61,058 | 49,749 | 44,387 | 42,151 | 45,898 | 47,426 |
| Second Reactor | Pressure total (Barg) | 2.6 | 2.5 | 2.5 | 2.5 | 2.5 | 2.5 | 2.5 |
| | C2 feed (kgC2 / tonC2 total) | 250 | 180 | 150 | 100 | 400 | 150 | 150 |
| | Temperature (°C) | 70 | 75 | 75 | 75 | 75 | 75 | 75 |
| | Comonomer type | butene-1 | butene-1 | butene-1 | butene-1 | butene-1 | hexene-1 | hexene-1 |
| | Comonomer feed (kgC4 / tonC2 at reactor 2) | 8.3 | 500.0 | 10.7 | 16.2 | 10.0 | 71.3 | 64.1 |
| | Individual IV (dl/g) | 6.7 | 8.7 | 11.3 | 13.6 | 10.2 | 12.6 | 13.5 |
| | Individual Mv (g/mol) | 918,628 | 1,344,674 | 1,990,95 4 | 2,629,65 1 | 1,712,30 5 | 2,341,67 4 | 2,583,756 |
| | IV total (dL/g) | 3.0 | 3.1 | 4.4 | 2.7 | 6.2 | 4.8 | 5.1 |
| | Mv total (g/mol) | 275,985 | 289,803 | 488,336 | 235,888 | 814,025 | 555,935 | 608,491 |

EP 4 357 371 A1

16

(continued)

| | Example name | IE1 | IE2 | IE3 | IE4 | IE5 | IE6 | IE7 |
|---|---|---|---|---|---|---|---|---|
| **Third Reactor** | **Pressure total (Barg)** | 1.2 | 3.5 | 4.0 | 4.0 | 4.0 | 5.5 | 5.5 |
| | **C2 feed (kgC2 / tonC2 total)** | 260 | 320 | 550 | 300 | 300 | 550 | 550 |
| | **Temperature (°C)** | 72 | 75 | 83 | 83 | 83 | 83 | 83 |
| | **Comonomer type** | butene-1 | butene-1 | butene-1 | butene-1 | butene-1 | hexene-1 | hexene-1 |
| | **Comonomer feed (kgC4 / tonC2 at reactor 3)** | 110.0 | 62.5 | 60.6 | 94.4 | 111.1 | 139.8 | 65.4 |
| | **H2 feed (kgH2 / tonC2 at reactor 3)** | 16.58 | 0.00 | 0.07 | 0.02 | 0.78 | 0.13 | 0.10 |
| | **Individual IV (dl/g)** | 11.3 | 11.2 | 8.0 | 12.7 | 4.6 | 5.2 | 7.5 |
| | **Individual Mv (g/mol)** | 1,992,973 | 1,963,125 | 1,198,15 5 | 2,369,41 9 | 527,419 | 619,838 | 1,073,175 |
| | **IV total (dL/g)** | 5.4 | 5.7 | 6.4 | 5.7 | 6.1 | 5.0 | 6.4 |
| | **Mv total (g/mol)** | 619,188 | 716,294 | 853,459 | 718,171 | 723,810 | 590,799 | 853,459 |

Table 3 Polymer properties of comparative Examples

| Properties | | Example | CE1 | CE2 | CE3 | CE4 | CE5 | CE6 | CE7 | CE8 | CE9 |
|---|---|---|---|---|---|---|---|---|---|---|---|
| | | Unit | | | | | | | | | |
| Material properties | Intrinsic viscosity of final product | dL/g | 4.1 | 13.3 | 4.7 | 4.8 | 6.8 | 3.2 | 6.5 | 9.0 | 12.0 |
| | Mv of final product | g/mol | 439,564 | 2,538,126 | 538,766 | 555,935 | 934,141 | 303,842 | 873,404 | 1,418,390 | 2,177,481 |
| | Mw | g/mol | 458,700 | 1,706,600 | - | 462,200 | 762,900 | 311,368 | 468,000 | 691,601 | 1,809,000 |
| | Mn | g/mol | 14,500 | 18,300 | - | 18,200 | 20,100 | 9,264 | 49,200 | 21,963 | 52,700 |
| | Mw / Mn | | 30 | 93 | - | 25 | 38 | 34 | 10 | 31 | 34 |
| | Comonomer | | butene-1 | butene-1 | butene-1 | butene-1 | butene-1 | butene-1 | - | - | - |
| | % mol comonomer, by NMR | % | 0.34 | 0.31 | 0.14 | 1.50 | 0.36 | 0.66 | - | - | - |
| | Charpy impact strength | kJ/m$^2$ | 39.7 | 103.4 | 42.4 | 68.4 | 100.2 | 23.9 | - | 266.6 | 252.9 |
| | Tensile strength at yield | MPa | 23.9 | 19.8 | - | 18.3 | 21.1 | 22.0 | 24.1 | 22.2 | 23.1 |
| | Strain hardening modulus <Gp> | MPa | 51.4 | 80.0 | 20.2 | 59.4 | 66.4 | 42.1 | 29.0 | 16.0 | 22.0 |
| | Eta (0.01) | kPa.s | 1,287,078 | 15,492,333 | - | 903,582 | 4,094,186 | 279,233 | - | 14,254,641 | 29,586,150 |
| | Eta (0.1) | kPa.s | 419,024 | 3,152,517 | - | 328,631 | 949,334 | 138,223 | - | 3,207,311 | 5,378,769 |
| | Eta (100) | kPa.s | 4,439 | 10,782 | - | 5,403 | 7,007 | 2,530 | - | 15,309 | 16,063 |

(continued)

| Properties | | Example | CE1 | CE2 | CE3 | CE4 | CE5 | CE6 | CE7 | CE8 | CE9 |
|---|---|---|---|---|---|---|---|---|---|---|---|
| | | Unit | | | | | | | | | |
| Pipe performance | Abrasion degree using CE6, PE100 as referent material | % | 73 | 42 | - | 62 | 50 | 100 | - | 40 | 35 |
| | Pipe pressure test, 12.4 MPa, 20 °C | hour | - | - | - | - | - | 120 | - | - | - |
| | Pipe pressure test, 5.4 MPa, 80 °C | hour | - | - | - | - | - | 500 | - | - | - |
| | Rapid crack propagation (RCP), crack arrest at pressure 10 Bar | mm | - | - | - | - | - | 128 | - | - | - |

Table 4 Polymer properties of inventive Examples

| Properties | | Example Unit | IE1 | IE2 | IE3 | IE4 | IE5 | IE6 | IE7 |
|---|---|---|---|---|---|---|---|---|---|
| Material properties | Intrinsic viscosity of final product | dL/g | 5.4 | 5.7 | 6.4 | 5.7 | 6.1 | 5.0 | 6.4 |
| | Mv of final product | g/mol | 662,584 | 718,171 | 843,543 | 712,546 | 794,540 | 590,799 | 853,459 |
| | Mw | g/mol | 591,900 | 776,200 | 774,400 | 648,600 | 699,900 | 446,200 | 435,500 |
| | Mn | g/mol | 15,600 | 17,700 | 16,600 | 15,100 | 16,000 | 15,200 | 13,300 |
| | Mw / Mn | | 38 | 44 | 47 | 43 | 46 | 29 | 33 |
| | Comonomer type | | butene-1 | butene-1 | butene-1 | butene-1 | butene-1 | hexene-1 | hexene-1 |
| | % mol comonomer, by NMR | % | 0.18 | 0.99 | 0.40 | 0.28 | 0.42 | 0.35 | 0.28 |
| | Charpy impact strength | kJ/m$^2$ | 35.7 | 86.0 | 101.4 | 27.2 | 78.0 | 76.3 | 70.0 |
| | Tensile strength at Yield | MPa | 24.7 | 22.2 | 22.0 | 26.6 | 22.0 | 22.0 | 22.7 |
| | Strain hardening modulus <Gp> Eta (0.01) Eta (0.1) | MPa kPa.s kPa.s | 44.0 4,406,456 1,006,304 | 50.0 2,394,459 600,219 | 78.0 3,046,054 843,905 | 47.7 2,455,251 613,474 | 51.0 2,032,797 648,046 | 67.2 716,901 292,336 | 63.9 725,730 287,751 |
| | Eta (100) | kPa.s | 7,013.8 | 5,131 | 7,033 | 5,141 | 5,627 | 5,310 | 5,232 |
| Pipe performance | Abrasion degree using CE6, PE100 as referent material | % | 67 | 65 | 56 | 52 | 56 | 63 | 52 |
| | Pipe pressure test, 12.4 MPa, 20 °C | hour | 1,238 | - | - | - | - | - | - |
| | Pipe pressure test, 5.4 MPa, 80 °C | hour | 2,847 | - | - | - | - | - | - |
| | Rapid crack propagation (RCP), crack arrest at pressure 10 Bar | mm | 0 | - | - | - | - | - | - |

The features disclosed in the foregoing description and in the dependent claims may, both separately and in any combination thereof, be material for realizing the aspects of the disclosure made in the independent claims, in diverse forms thereof.

**Claims**

1. A multimodal polyethylene composition comprising;

   (A) 25 to 65 % by weight, with respect to the total weight of the multimodal polyethylene composition, of a low molecular weight polyethylene having a viscometer molecular weight, Mv, from 35,000 to 90,000 g/mol;
   (B) 8 to 42 % by weight, with respect to the total weight of the multimodal polyethylene composition, of a first high molecular weight polyethylene homopolymer or copolymer having a viscometer molecular weight, Mv, from 750,000 to 3,500,000 g/mol;
   (C) 24 to 57 % by weight, with respect to the total weight of the multimodal polyethylene composition, of a second high molecular weight polyethylene homopolymer or copolymer having viscometer molecular weight, Mv, from 400,000 to 3,000,000 g/mol;

   wherein the multimodal polyethylene composition has

   - a viscometer molecular weight from 500,000 to 1,000,000 g/mol,
   - an intrinsic viscosity from 4.5 to 75 dl/g measured according to ISO 1628,
   - a comonomer content of 0.16 to 1.20% mol, with respect to the total amount of monomer in the low molecular weight polyethylene, the first high molecular weight polyethylene homopolymer or copolymer, and the second high molecular weight polyethylene homopolymer or copolymer, and

   the first high molecular weight polyethylene homopolymer or copolymer and the second high molecular weight polyethylene homopolymer or copolymer differ from each other with respect to the viscometer molecular weight thereof.

2. . The multimodal polyethylene composition according to claim 1, wherein the multimodal polyethylene composition has viscometer molecular weight of 500,000 to 870,000 g/mol and preferably from 550,000 to 854,000 g/mol.

3. The multimodal polyethylene composition according to claim 1 or 2, wherein the multimodal polyethylene composition has a stain hardening modulus, <Gp>, from 40 to 85 MPa, preferably from 42 to 80 MPa and more preferably from 43 to 79 MPa,

4. . The multimodal polyethylene composition according to any of the claims 1 to 3, wherein the multimodal polyethylene composition has a tensile strength at yield from 19 to 30 MPa, preferably 20 to 28 MPa and more preferably 21 to 27 MPa measured according to ISO 527.

5. . The multimodal polyethylene composition according to any of the claims 1 to 4, wherein the multimodal polyethylene composition has a Charpy impact strength from 23 to 110 kJ/m$^2$, and preferably 25 to 105 kJ/m$^2$, measured according to ISO 179.

6. . The multimodal polyethylene composition according to any of the claims 1 to 5, wherein the multimodal polyethylene composition has a comonomer content from 0.17 to 1.1 % mol, with respect to the total amount of monomer in the low molecular weight polyethylene, the first high molecular weight polyethylene homopolymer or copolymer, and the second high molecular weight polyethylene homopolymer or copolymer.

7. . The multimodal polyethylene composition according to any of the claims 1 to 6, wherein the multimodal polyethylene composition has the intrinsic viscosity from 5.0 to 6.4 dl/g.

8. . An article comprising the multimodal polyethylene composition according to any of the claims 1 to 7, wherein the article is a casting sheet, a profile extrusion, a film, or a hollow article, such as pipe and tube.

Europäisches Patentamt

European Patent Office

Office européen des brevets

# EUROPEAN SEARCH REPORT

**Application Number**

EP 22 20 1839

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/095404 A1 (JARUMANEEROJ CHATCHAI [TH] ET AL) 26 March 2020 (2020-03-26) * paragraphs [0001], [0013], [0014], [0065] * * example 3 * * tables 1, 2 * * claims 1-10 * | 1-8 | INV. C08F2/00 C08F210/16 C08F10/02 C08F110/02 C08L23/06 C08L23/08 |
| A | WO 2018/046604 A1 (THAI POLYETHYLENE CO LTD [TH]; SCG CHEMICALS CO LTD [TH]) 15 March 2018 (2018-03-15) * tables 1, 2 * * claims 1-11 * | 1-8 | |

-----

-----

TECHNICAL FIELDS SEARCHED (IPC)

C08F
C08L

The present search report has been drawn up for all claims

| Place of search | Date of completion of the search | Examiner |
|---|---|---|
| Munich | 30 March 2023 | Neumeier, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 1839

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2023

| Patent document cited in search report | | Publication date | Patent family member(s) | | Publication date |
|---|---|---|---|---|---|
| US 2020095404 | A1 | 26-03-2020 | AU | 2017322270 A1 | 07-03-2019 |
| | | | AU | 2017322271 A1 | 07-03-2019 |
| | | | BR | 112019002864 A2 | 14-05-2019 |
| | | | BR | 112019002965 A2 | 21-05-2019 |
| | | | CA | 3033012 A1 | 15-03-2018 |
| | | | CA | 3033116 A1 | 15-03-2018 |
| | | | CN | 108350200 A | 31-07-2018 |
| | | | CN | 108368185 A | 03-08-2018 |
| | | | EP | 3293214 A1 | 14-03-2018 |
| | | | EP | 3510086 A1 | 17-07-2019 |
| | | | JP | 7071966 B2 | 19-05-2022 |
| | | | JP | 2019526685 A | 19-09-2019 |
| | | | JP | 2019526688 A | 19-09-2019 |
| | | | KR | 20190055106 A | 22-05-2019 |
| | | | KR | 20190055128 A | 22-05-2019 |
| | | | PL | 3293214 T3 | 27-07-2020 |
| | | | RU | 2728873 C1 | 31-07-2020 |
| | | | RU | 2019110831 A | 12-10-2020 |
| | | | US | 2019225714 A1 | 25-07-2019 |
| | | | US | 2020095404 A1 | 26-03-2020 |
| | | | WO | 2018046712 A1 | 15-03-2018 |
| | | | WO | 2018046713 A1 | 15-03-2018 |
| | | | ZA | 201901598 B | 28-07-2021 |
| | | | ZA | 201901603 B | 30-06-2021 |
| WO 2018046604 | A1 | 15-03-2018 | BR | 112019002966 A2 | 21-05-2019 |
| | | | CA | 3033007 A1 | 15-03-2018 |
| | | | CN | 108350097 A | 31-07-2018 |
| | | | CN | 114805651 A | 29-07-2022 |
| | | | EP | 3293205 A1 | 14-03-2018 |
| | | | EP | 3530675 A1 | 28-08-2019 |
| | | | ES | 2758793 T3 | 06-05-2020 |
| | | | ES | 2883800 T3 | 09-12-2021 |
| | | | HU | E047204 T2 | 28-04-2020 |
| | | | HU | E055304 T2 | 29-11-2021 |
| | | | JP | 7092718 B2 | 28-06-2022 |
| | | | JP | 7092749 B2 | 28-06-2022 |
| | | | JP | 2019214734 A | 19-12-2019 |
| | | | JP | 2019526687 A | 19-09-2019 |
| | | | KR | 20190055107 A | 22-05-2019 |
| | | | KR | 20190115120 A | 10-10-2019 |
| | | | MY | 190182 A | 31-03-2022 |
| | | | PT | 3293205 T | 31-10-2019 |
| | | | PT | 3530675 T | 23-07-2021 |
| | | | RU | 2019110777 A | 12-10-2020 |
| | | | WO | 2018046604 A1 | 15-03-2018 |

EPO FORM P0459

For more details about this annex : see Official Journal of the European Patent Office, No. 12/82

page 1 of 2

EP 4 357 371 A1

**ANNEX TO THE EUROPEAN SEARCH REPORT
ON EUROPEAN PATENT APPLICATION NO.**

EP 22 20 1839

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2023

| Patent document cited in search report | Publication date | Patent family member(s) | Publication date |
|---|---|---|---|

--------------------------------------------------------------------------

EPO FORM P0459

For more details about this annex : see Official Journal of the European Patent Office, No. 12/82

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013144328 A
- EP 2354184 A1
- WO 2009147022 A1
- EP 2017302 A1
- WO 2007045415 A1
- WO 2008131817 A1
- JP 2012067914 A
- WO 2013056754 A1
- EP 2354183 A1
- EP 3176213 B1
- WO 2011089017 A1
- EP 3293205 B1
- HU 0800771R
- US 20170369612 A1

**Non-patent literature cited in the description**

- **B. HAGSTROM.** Extended Abstracts and Final Programme. *Conference on Polymer Processing (The Polymer Processing Society),* 19 August 1997, vol. 4, 13